# EUROPEAN PATENT APPLICATION

(11) **EP 2 135 506 A1**
(43) Date of publication of application: **23.12.2009**
(21) Application number: 08158497.1
(22) Date of filing: 18.06.2008
(51) Int. Cl.: A01K 63/06

(54) **Temperature Control Device for Aquarium**

(71) Applicant: Sinn Long Development Co., Ltd., Huwei Township 632 (TW)
(72) Inventor: TSAI, Hsueh-Lee, 632, Huwei Township (TW)
(74) Representative: Viering, Jentschura & Partner

(57) **Abstract**

An aquarium (1) includes a receptacle (10) having a chamber (11) for receiving a water, a temperature control device (2) having a heater (22) coupled to a processor device (21) for heating the water contained in the receptacle (10), a temperature detector (30) for detecting the water temperature, a displayer (33) for showing the detected water temperature, and a remote control device (40) having a receiver (41) coupled to the processor device (21) and a signal emitter (42) for being operated by a user to emit a control signal to the receiver (41) and to actuate the processor device (21) to operate the heater (22) and to determine the required water temperature and to prevent the user from contacting the temperature control device for the aquarium.

## Description

### BACKGROUND OF THE INVENTION

### 1. Field of the Invention

The present invention relates to a temperature control device for an aquarium, and more particularly to a temperature control device including a remote control facility to remote control the temperature of the water contained in the aquarium and to prevent the user from contacting the temperature control device for the aquarium.

### 2. Description of the Prior Art

Typical aquariums comprise a pump and an air outlet for producing light reflecting bubbles, and a filter for filtering the water contained in the aquarium, and a pumping or circulating device for circulating the water contained in the aquarium and for allowing the water to be suitably filtered and cleaned.

The other typical aquariums further comprise a heater for heating the water contained in the aquarium and for maintaining the water in the selected or suitable temperature range and for allowing the fish to live in the suitable water temperature.

For example, U.S. Patent No. 4,026,243 to Jessop, III, discloses one of the typical aquariums comprising a bulbous shaped terrarium, an aquarium and a light enclosure superposed with each other, and comprising a heater for heating the water contained in the aquarium.

However, normally, a switch is provided for being contacted and rotated by the user in order to control the heater to heat the water contained in the aquarium, such that the user may have a good chance to get an electric shock.

In addition, the heaters of the typical aquariums are normally made of heating wires, silica tubes, glass tubes or quartz tubes which may have a good chance to be exploded. Furthermore, the typical aquariums have no temperature control device to control and to operate the heater such that the water contained in the aquarium may have a good chance to be overheated and such that the fish may be killed inadvertently.

The present invention has arisen to mitigate and/or obviate the afore-described disadvantages of the conventional temperature control devices.

### SUMMARY OF THE INVENTION

The primary objective of the present invention is to provide a temperature control device including a remote control facility to remote control the temperature of the water contained in the aquarium and to prevent the user from contacting the temperature control device for the aquarium.

The other objective of the present invention is to provide a temperature control device including an automatic shut-off device for automatically switching off the heater when the water has been detected that the water is overheated, or that the water temperature is greater than a predetermined or suitable or selected temperature value.

The further objective of the present invention is to provide a temperature control device including a safety device for automatically switching off the heater when the temperature control device is removed from the aquarium and disengaged from the water contained in the aquarium.

In accordance with one aspect of the invention, there is provided an aquarium comprising a receptacle including a chamber formed therein for receiving a water, a temperature control device including a processor device, a heater coupled to the processor device for being controlled by the processor device to heat the water contained in the receptacle, a temperature detector coupled to the processor device for transmitting a detected water temperature of the water contained in the receptacle to the processor device, a displayer coupled to the processor device for showing the detected water temperature, and a remote control device including a receiver coupled to the processor device for controlling the processor device, and a signal emitter for being operated by a user to emit a control signal to the receiver and to actuate the processor device to operate the heater and to determine a required water temperature for the water contained in the receptacle.

The heater includes at least one heating member having a casing made a metal material for heat transmitting purposes. The metal material may be selected from aluminum or the other metal materials.

The heating member includes a heating element disposed in the casing. The casing includes a number of fins extended outwardly therefrom for heat transmitting purposes and for increasing the heating effect to the water contained in the receptacle.

The temperature control device includes an automatic shut-off device coupled to the processor device for being controlled by the processor device to switch off the heater when the temperature detector has detected that the water contained in the receptacle is overheated.

The temperature control device includes a converter coupled to the processor device for converting the alternating current to the direct current, and for supplying an electric energy to energize the processor device and the heater.

The temperature control device includes a safety device coupled to the processor device for switching off the heater when the temperature control device is removed from the receptacle and disengaged from the water contained in the receptacle and for preventing the heater from being energized or operated inadvertently.

The safety device includes two terminals for being electrically connected together with the water when the safety device of the temperature control device is engaged into the receptacle and engaged with the water, and for being disconnected from each other when the safety device of the temperature control device is removed from the receptacle and disengaged from the water contained in the receptacle.

Further objectives and advantages of the present invention will become apparent from a careful reading of the detailed description provided hereinbelow, with appropriate reference to the accompanying drawings.

### BRIEF DESCRIPTION OF THE DRAWINGS

FIG. 1 is a partial cross sectional view of an aquarium in accordance with the present invention;
FIG. 2 is a plan schematic view illustrating the elements of a temperature control device for the aquarium;
FIG. 3 is a plan schematic view illustrating the electric circuit of the temperature control device for the aquarium;
FIG. 4 is a plan schematic view of the temperature control device for the aquarium; and
FIG. 5 is a perspective view of a heater for the temperature control device.

### DETAILED DESCRIPTION OF THE PREFERRED EMBODIMENT

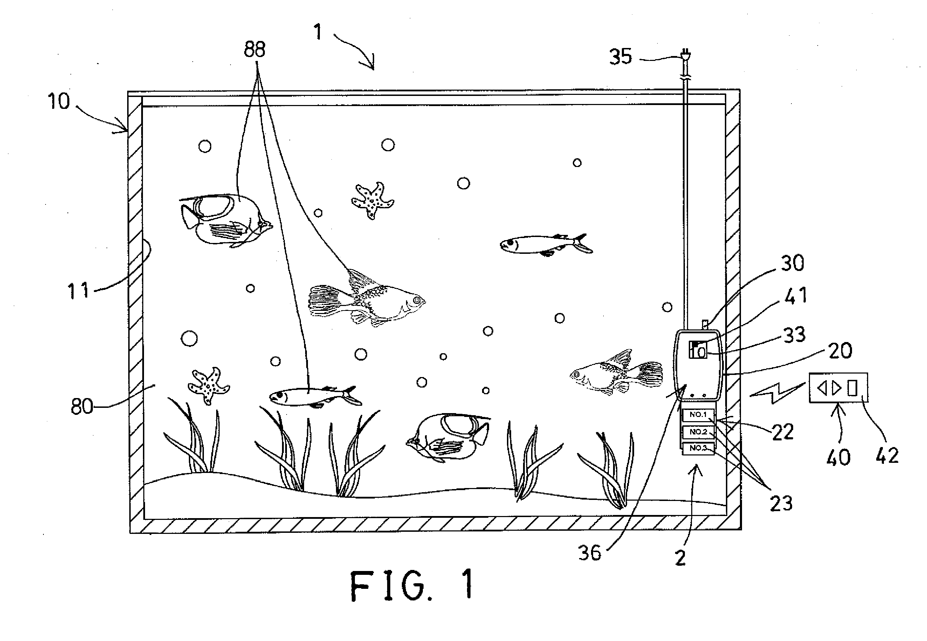

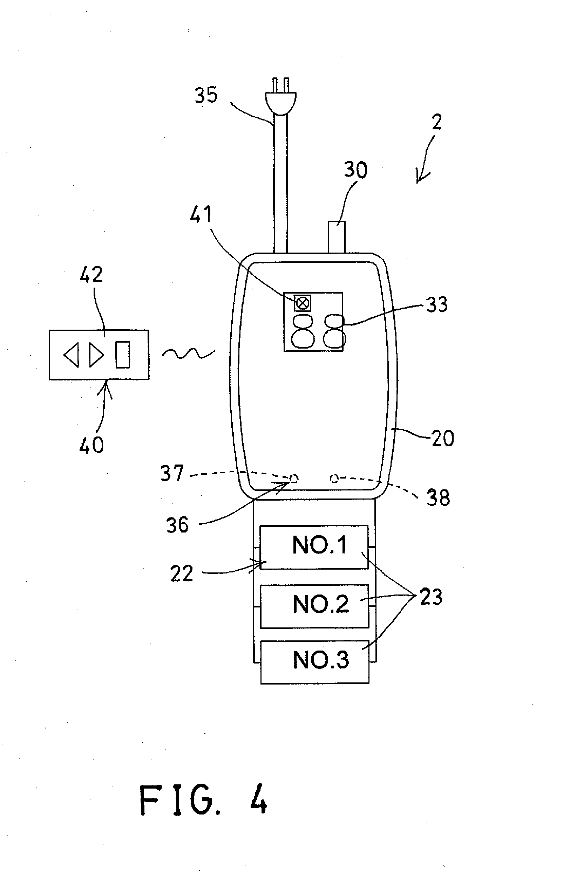

Referring to the drawings, and initially to FIGS. 1 and 4, an aquarium 1 in accordance with the present invention comprises a receptacle 10 including a chamber 11 formed therein for receiving or containing the water 80, the fish 88 or the like, and a temperature control device 2 including a housing 20 to be disposed or engaged into the water 80 contained in the receptacle 10 of the aquarium 1 for heating the water 80 contained in the receptacle 10 and for maintaining the water 80 in the selected or suitable temperature range.

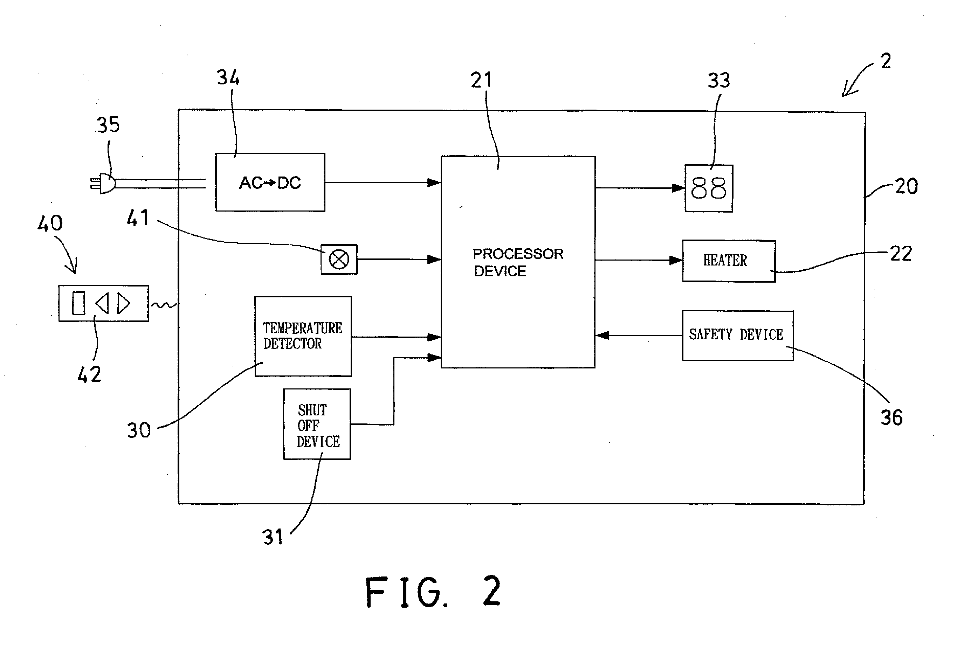

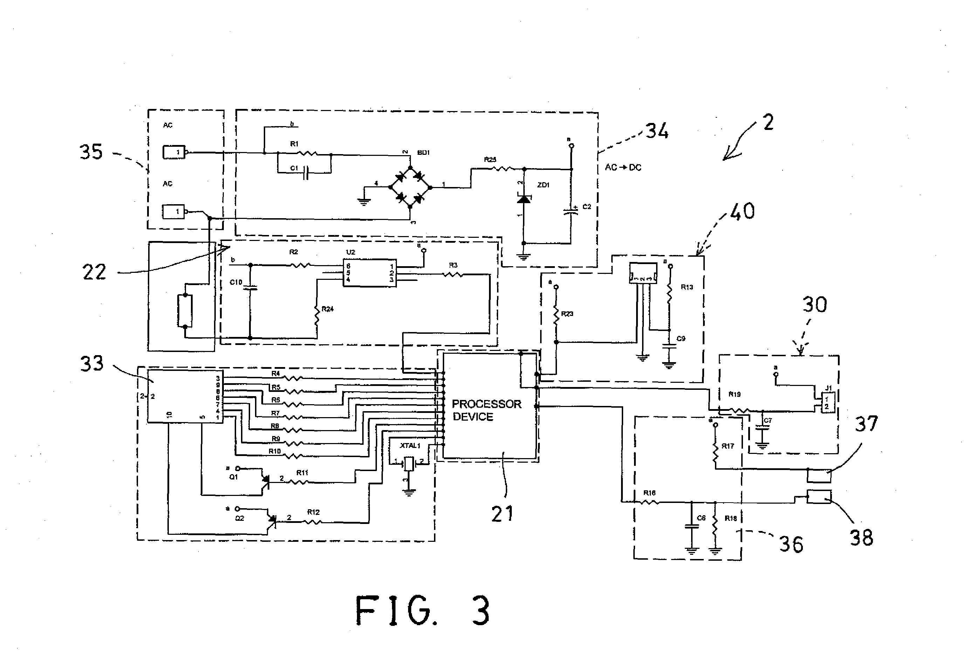

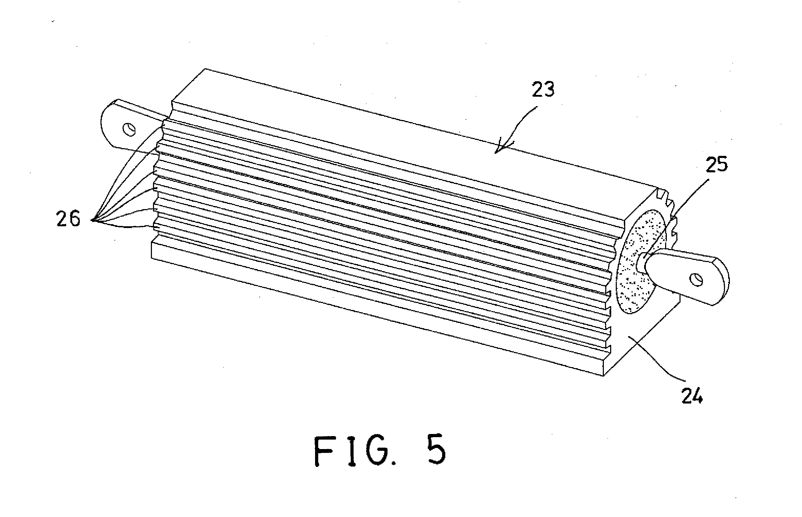

As shown in FIGS. 2 and 3, the temperature control device 2 includes a microcontroller or processing unit or processor device 21 disposed in the housing 20, and a heater 22 coupled to the processor device 21 for being controlled by the processor device 21 to heat the water 80 contained in the receptacle 10. As shown in FIG. 4, the heater 22 may include one or more (such as three) heating members 23 each having an outer casing 24 (FIG. 5) formed or made of aluminum or other metal materials, and each having a heating element 25 disposed or engaged in the casing 24, and each having a number of fins 25 extended outwardly from the casing 24 for heat transmitting purposes and for increasing the heating effect to the water 80 contained in the receptacle 10.

The temperature control device 2 further includes a temperature sensor or detector 30 coupled to the processor device 21 for sending or transmitting the detected water temperature of the water 80 contained in the receptacle 10 to the processor device 21, an automatic shut-off device 31 also coupled to the processor device 21 for being controlled by the processor device 21 to switch off or to shut off the heater 22 when the temperature detector 30 has detected that the water 80 contained in the receptacle 10 is overheated or has a temperature value greater than a predetermined or suitable or selected temperature value.

A screen or displayer 33 is also coupled to the processor device 21 for showing or displaying the detected water temperature of the water 80 contained in the receptacle 10, and a transformer or converter 34 is coupled to an electric power source with a plug or coupler 35 and also coupled to the processor device 21 for converting the alternating current to the direct current, and for supplying the electric power or energy to energize the processor device 21 and the heater 22 and the displayer 33 and the other electric facilities, and a safety device 36 is coupled to the processor device 21 for switching off or to shutting off the electric circuit of the temperature control device 2 and/or the heater 22 when the housing 20 of the temperature control device 2 is removed from the receptacle 10 or disengaged from the water 80 contained in the receptacle 10.

For example, as shown in FIGS. 3 and 4, the safety device 36 may include two contacts or terminals 37, 38 which may be electrically connected or coupled together with the water 80 contained in the receptacle 10 when the housing 20 is engaged into the receptacle 10 and engaged with the water 80 contained in the receptacle 10, and the contacts or terminals 37, 38 may be disconnected from each other when the housing 20 is removed from the receptacle 10 or disengaged from the water 80 contained in the receptacle 10, in order to switch off or to shut off the electric circuit of the temperature control device 2 and/or the heater 22, and so as to prevent the heating members 23 of the heater 22 from being energized or operated inadvertently.

The temperature control device 2 further includes a remote control device 40 having a receiver 41 coupled to the processor device 21 for actuating or controlling the processor device 21, and a signal emitter 42 for being operated by the user to send or emit the control signals to the receiver 41 in order to actuate or to control the processor device 21 to operate the heater 22 and to determine or to select the required water temperature for the water 80 contained in the receptacle 10, and thus to prevent the user from contacting the temperature control device 2. The shut-off device 31 and the safety device 36 may automatically switch off or shut off the electric circuit of the temperature control device 2 and/or the heater 22 so as to prevent the heating members 23 of the heater 22 from being energized or operated inadvertently.

In operation, as shown in FIG. 1, the user may send or emit the control signals to the receiver 41 with the signal emitter 42 in order to actuate or to control the processor device 21 to operate the heater 22 and to control the temperature of the water 80 contained in the receptacle 10 in the selected or predetermined or suitable temperature range. It is to be noted that the outer casings 24 of the heating members 23 of the heater 22 are formed or made of aluminum or other metal materials which will not be exploded. In addition, the fins 25 extended outwardly from the casing 24 may be used for heat transmitting purposes and for increasing the heating effect to the water 80 contained in the receptacle 10.

Accordingly, the temperature control device in accordance with the present invention includes a remote control facility to remote control the temperature of the water contained in the aquarium and to prevent the user from contacting the temperature control device for the aquarium.

Although this invention has been described with a certain degree of particularity, it is to be understood that the present disclosure has been made by way of example only and that numerous changes in the detailed construction and the combination and arrangement of parts may be resorted to without departing from the spirit and scope of the invention as hereinafter claimed.

## Claims

1. An aquarium comprising:
a receptacle including a chamber formed therein for receiving a water,
a temperature control device including:
a processor device,
a heater coupled to said processor device for being controlled by said processor device to heat the water contained in said receptacle,
a temperature detector coupled to said processor device for transmitting a detected water temperature of the water contained in said receptacle to said processor device,
a displayer coupled to said processor device for showing the detected water temperature, and
a remote control device including a receiver coupled to said processor device for controlling said processor device, and a signal emitter for being operated by a user to emit a control signal to said receiver and to actuate said processor device to operate said heater and to determine a required water temperature for the water contained in said receptacle.

2. The aquarium as claimed in claim 1, wherein said heater includes at least one heating member having a casing made a metal material for heat transmitting purposes.

3. The aquarium as claimed in claim 2, wherein said metal material is selected from aluminum.

4. The aquarium as claimed in claim 2, wherein said at least one heating member includes a heating element disposed in said casing.

5. The aquarium as claimed in claim 2, wherein said casing includes a plurality of fins extended outwardly therefrom.

6. The aquarium as claimed in claim 1, wherein said temperature control device includes an automatic shut-off device coupled to said processor device for being controlled by said processor device to switch off said heater when said temperature detector has detected that the water contained in said receptacle is overheated.

7. The aquarium as claimed in claim 1, wherein said temperature control device includes a converter coupled to said processor device for supplying an electric energy to energize said processor device and said heater.

8. The aquarium as claimed in claim 1, wherein said temperature control device includes a safety device coupled to said processor device for switching off said heater when said temperature control device is removed from said receptacle and disengaged from the water contained in said receptacle.

9. The aquarium as claimed in claim 8, wherein said safety device includes two terminals for being electrically connected together with the water when said safety device of said temperature control device is engaged into the receptacle and engaged with the water, and for being disconnected from each other when said safety device of said temperature control device is removed from said receptacle and disengaged from the water contained in said receptacle.
